# EUROPEAN PATENT SPECIFICATION

(11) **EP 1 159 126 B1**
(45) Date of publication and mention of the grant of the patent: **31.03.2004**
(21) Application number: 99902338.5
(22) Date of filing: 15.01.1999
(51) Int. Cl.: B41J 31/09, B32B 27/20

(54) **CORRECTION TAPE HAVING DYE MIGRATION BLOCKING PROPERTIES**
KORREKTURBAND MIT FARBÜBERTRAGUNGSBLOCKIERENDEN EIGENSCHAFTEN
BANDE DE CORRECTION DOTEE DE PROPRIETES DE BLOCAGE DE LA MIGRATION DU COLORANT

(43) Date of publication of application: 05.12.2001
(73) Proprietor: BIC CORPORATION, Milford Connecticut 06460 (US)
(72) Inventor: NIENABER, Renate, D-55122 Mainz (DE); BRADLEY, Creg, G., Simpsonville, SC 29680 (US); SASTRY, Shyamy, R., Greenville, SC 29615 (US)
(74) Representative: Chapman, Paul Gilmour
(86) International application number: PCT/US1999/001035
(87) International publication number: WO 2000/041881

(56) References cited:
- EP-A- 0 318 804
- WO-A-91/17894
- WO-A-97/42036
- US-A- 4 055 704
- US-A- 4 654 081
- US-A- 4 883 379
- US-A- 5 221 577
- US-A- 5 700 552

## Description

### BACKGROUND OF THE INVENTION

The present invention is directed to correction tapes having dye migration blocking properties. More specifically, the present invention includes a correction medium layer comprising an opacifying pigment, binding agent, and bleed inhibitor and a transfer layer on a support member to form a correction tape that can be used to mask erroneous markings with improved resistance to ink bleed through.

Correction tape is a commonly used method to correct erroneous markings. The tape typically comprises two parts, a polymeric tape as a base, and a corrective composition that may be multi-layered. The corrective composition may contain pigments, fillers, such as clay, a polymeric binder and dispersant to anchor the pigments to the paper, as well as, a dispersant medium or solvent to maintain fluid viscosity.

A layer of correction medium is deposited onto a tape which is later transferred onto paper once pressure is applied on the tape. The result is a layer of correction medium layer over the erroneous marking.

Correction tapes allow ink dyes to bleed through, or into, the applied correction material. Typically, latex binder polymer emulsions are acrylic copolymers and/or ethylene vinyl acetate copolymers, which minimize the diffusion of underlying ink markings into or through the correction layer which is applied over the ink markings. Such dissolution of the marking causes so-called bleeding or smudging of the marking into the correction fluid, which causes a discoloration of the film and corrected spot. Bleeding means that the white correction layer assumes a bluish or reddish tint or other type of blemish color due to the ink dye penetrating the surface being corrected. This bleeding effect is a major shortcoming of the presently used correction tapes.

European Patent No. 0 647 689 A1 discloses a correction fluid capable of preventing bleedthrough which uses an aminosilane in combination with an acid-functional vinyl polymer to create a correction fluid which effectively fixes the aqueous based ink dyes and prevents them from migrating into white type-out correction fluids.

PCT patent application WO 92/07039 discloses a correction fluid capable of preventing bleeding which contains water or a mixture of water and volatile organic water-miscible solvents as suspension medium, and a cationically active film-forming binder to fix the dyes in the area to be corrected.

PCT patent application WO 94/29393 discloses an aqueous correction fluid with a cationic polymer suitable for application to marks made with water-fast inks. The aqueous correction fluid includes water, an opacifying pigment dispersed in the water, a cationic polymer that inhibits bleeding, and a water insoluble film-forming polymer. The cationic polymer inhibits bleeding of the ink through the corrective coating by hindering the movement of anionic dyes from the ink mark through the corrective coating.

PCT patent application WO 96/01878 discloses a correction fluid with a cationic stain blocking agent which primarily serves as a binder, enabling the correction fluid to effectively bind pigments to paper and form a continuous dry film at room temperature. The correction fluid contains an opacifying agent, which includes a blend of titanium dioxide, and a clay which act in combination with the stain blocking agent to improve the hiding power of the correction fluid.

PCT patent application WO 98/30641 discloses a correction fluid which includes an opacifying agent, a cationic film-forming polymer, a nonionic film-forming agent, and a dispersing agent. The cationic film-forming polymer serves as a binder, enabling the correction fluid to effectively bind to a paper substrate and to form a continuous film on the paper substrate upon drying at room temperature. The opacifying agent comprises of two grades of titanium dioxide. A first grade of titanium dioxide selected to provide hiding power, and a second grade of titanium dioxide selected to provide suspension redispersability, a film-forming layer, and water. Thus, the combination of two types of titanium dioxide allow to maximize the masking ability of the liquid while minimizing the solubility of the masking agent.

US4,055,704 relates to typing correction paper consisting of a carrier sheet and a thin dry coating layer on the carrier sheet, which coating layer is transferred from the carrier sheet to a substrate on application of sufficient pressure. The coating layer comprises a pigment to provide opacity to cover characters to be masked and a high molecular weight organic ammonium salt as a binding and adhesive agent for the pigment.

Despite these efforts to formulate correction fluids which prevent bleed through, correction tapes having better bleed through resistance are still desired by the industry. As new water and solvent based ink compositions are developed, new compositions and formulations of correction tapes are necessary to maintain good bleed through resistance.

### SUMMARY OF THE INVENTION

In a first aspect the present invention provides a correction tape comprising:
a support member;
a correction medium layer which includes:
   an opacifying pigment in an amount sufficient to mask printed or ink matter on a substrate;
   a bleed inhibitor in an amount sufficient to prevent or reduce ink transmission through the correction medium layer; and
   a polymeric binder for retaining the opacifying pigment and bleed inhibitor in the correction medium layer to facilitate deposition of the layer onto the support member and to retain integrity when the layer is transferred to the substrate to mask the printed or ink matter thereon; and
a transfer layer which includes a pressure sensitive adhesive for adhering the correction medium layer to the printed or ink matter and substrate.

The present invention is directed to a correction tape comprising a support member, a correction medium layer, and a transfer layer. The support member is typically paper, a thermoplastic film, or metallic foil. The correction medium layer includes an opacifying pigment in an amount sufficient to mask printed or ink matter on a substrate; a bleed inhibitor in an amount sufficient to prevent or reduce ink transmission through the correction medium layer; and a binding polymer for retaining the opacifying pigment and bleed inhibitor in the correction medium layer to facilitate deposition of the layer on the support member and transfer of the layer onto printed or ink matter on a substrate.

Advantageously, the bleed inhibitor comprises at least one of a polyvinyl amine, a phospholipid, a tallow amine, or a mixture thereof. Preferably, the bleed inhibitor includes the combination of the polyvinyl amine and the phospholipid, optionally with the tallow amine, if desired. The bleed inhibitor is typically present in the correction medium layer in an amount between about 0.01% to about 10% by weight.

Generally, the opacifying pigment comprises TiO₂. The correction medium layer further comprises one or more of a biocide, filler, defoamer, wax emulsion, or surfactant. If desired, at least one toner or coloring agent can be included to impart a color to the correction medium layer.

The transfer layer facilitates the deposition of the correction medium layer onto a surface containing erroneous markings. The transfer layer comprises at least one pressure sensitive adhesive which is applied over the correction medium layer.

### DETAILED DESCRIPTION OF THE INVENTION

The present invention resolves the problem of bleed-through of dyes through correction compositions by introducing a chemical additive in the correction medium layer which serves a dual function. The first function is to prevent dye migration, and the second function to prevent smearing of inks written over the correction medium layer.

The present invention provides several benefits. One embodiment of the invention provides a two layered correction tape that increases bleed through resistance. Another advantage of the two-layered tape is that the present invention can be used on conventional machinery, thus not requiring additional equipment for the manufacture of the two-layered tape. Yet another advantage of the present invention is that the bleed inhibitor provides improved ink bleed resistance in the correction tape. Additionally the write-over ability of the correction tapes is improved over the conventional prior art tapes without sacrificing other properties of the correction medium layer such as opacity, film integrity, water resistance, and color.

The invention is directed to two layered correction tapes with a transfer layer and a correction medium layer containing at least one bleed inhibitor additive. The bleed inhibitor has a dual effect; it decreases ink bleed and allows for overwriting without smearing.

The invention features correction medium layers that have good bleed resistance when used to cover marks made with inks. As used herein, the term "inks" means an ink which is either water based or solvent based and which is deposited from writing instruments or printing devices.

The invention preferably comprises a correction tape which includes a support member coated with the correction medium layer which is then coated with a transfer layer. The correction medium layer comprises opacifying pigment, polymer binder, and bleed inhibitor.

The support member includes a support layer that can receive the correction medium layer. Suitable support members can be coiled into rolls and used in correction tape dispensers. Suitable correction tape dispensers include those disclosed in U.S. Patent No. 5,556,469 issued to Koyama et al. Preferred support members include paper, plastic films, such as polyester, polycarbonate, polyacrylic, polyolefin, polystyrene, etc., and metal foils such as aluminum, zinc, brass, etc. More preferred support members include controlled release siloxane double coated glassine paper such as Item #17513 (50 lb. white coated two sided moderate release) manufactured by Siltech.

The correction medium layer includes compounds capable of carrying the opacifying pigment and bleed inhibitor onto the support member or support surface, as well as onto the paper or other substrate that contains the erroneous markings to be corrected. A preferred compound is a binding agent such as polymers, other additives such as biocides, fillers, defoamers, dispersants, waxes, and surfactants, can also be included.

As used in the present invention, "biocide" means a chemical agent capable of killing living organisms, i.e., a preservative. The preservative or biocide is used to prevent bacteria or fungi from contaminating the correction medium layer. Bacteria and fungi attack polymers, and are often found dormant in some of the ingredients. A sufficient amount of biocide should be used to prevent bacterial growth. Biocides include Troysan^{RTM} 174, Troysan^{RTM} 186, Troysan^{RTM} 395, manufactured by Troy, Paradyme^{RTM}, manufactured by Zeneca, Canguard^{RTM} 442 and Canguard^{RTM} 327 manufactured by Angus, mixtures thereof, or any number of compounds known as recognized by those skilled in the art. Preferably, biocide should be in the amount between about 0.001% to about 1% by weight. More preferably, biocide should be in the amount between about 0.05% to about 0.5%.

Fillers incorporated into the correction medium layer are the normally commercially available fillers. Such fillers typically include magnesium carbonate, calcium carbonate, barium carbonate, barium sulfate, aluminum oxide, silicon dioxide, sellaite, clay, talc, or mixtures thereof. The amount of fillers present in the correction medium layer is between about 5% to about 40% by weight. Preferably, the amount of fillers present in the correction medium layer is between about 10% to about 30% by weight.

As used in the present invention, "defoamer" is a compound capable of reducing foam within the correction medium layer during application to the support member. Suitable defoamers include Dee Fo^{RTM} 97-3 made by UltraAdditives, Foamaster^{RTM} 111 manufactured by Henkel,305 Antifoam^{RTM}, 62 Additive^{RTM}, 65 Additive manufactured by Dow Corning, Dapro^{RTM} DF 944 manufactured by ELEMENTIS, Colloid^{RTM} 643 manufactured by Rhone-Poulenc, Surfynol^{RTM} DF-58 manufactured by Air Products, and mixtures thereof. The amount of defoamers present in the correction medium layer is between about 0.01% to about 2% by weight, preferably between about 0.1% to about 0.75% by weight.

As used in the present invention, a "surfactant" is a compound capable of reducing the surface tension of the correction medium layer during coating, such that the coating will apply smoothly and evenly to the support member. Suitable surfactants include FC-120^{RTM} manufactured by 3M, BYK^{RTM} 345, BYK^{RTM} 346, and BYK^{RTM} 348 manufactured by BYK Chemie, Surfynol^{RTM} 104A, Surfynol^{RTM} 104BC, Surfynol^{RTM} 104E, and Surfynol^{RTM} 104H manufactured by Air Products, Triton^{RTM} X-102, Triton^{RTM} CF-10, Triton^{RTM} X-35 manufactured by Union Carbide, and mixtures thereof. The amount of surfactants present in the correction medium layer is between about 0.1% to about 3% by weight, preferably between about 0.1% to about 1.5% by weight.

Any suitable opacifying pigment having adequate hiding power to cover ink may be utilized as the primary pigment in the correction medium layer. A preferred opacifying primary pigment is titanium dioxide, TiO₂, as it provides for maximum hiding and is a white pigment which can be toned to match a variety of bright paper stock colors. More than one type of TiO₂ may be used to maximize hiding and optimize the viscosity of the correction coating.

Sufficient opacifying pigment should be included so that a mark on paper is not visible after curing, but not so much that it interferes with the correction medium layer's physical strength (i.e., make the correction medium layer too brittle). Opacifying pigments include at least pigments such as TiO₂, however other filler pigments may be used. Preferably, the opacifying pigment should include TiO₂ between about 20% to about 80% and more preferably between about 30% to about 70%, of the pigment by weight of the correction medium layer. Suitable TiO₂ pigments include commercially available R-700, R-706, R-902, R-931, R-960, R-900 manufactured by Dupont, Tronox^{RTM} CR-813, Tronox^{RTM} CR-822, Tronox^{RTM} CR-828 manufactured by Kerr-McGee, Kronos^{RTM} 2020, Kronos^{RTM} 2090, Kronos^{RTM} 2102, Kronos^{RTM} 2131 manufactured by Kronos, and mixtures thereof. The various grades have different levels of surface treatment to promote dispersability, hiding power, and stability. One of ordinary skill in the art can select the best type of specific pigment for any particular formulation of correction medium layer by conducting routine tests. Suitable filler pigments include commercially available Huber^{RTM} 90C, and Polygloss^{RTM} 90 made by Huber.

The correction medium layer is typically colored white because articles to be subjected to masking-correction are generally white paper. Where a paper sheet or a like article colored in a color other than white is to be subjected to masking correction, the masking layer is preferably colored in substantially the same color as the background color of the article so that masked portions thereof are neither distinguished from the background nor outstanding.

Typically, TiO₂ is used as a white pigment for the opacifying pigment, because it has excellent hiding power. The opacifying pigment color may be adjusted by using a coloring agent or toner together with the white pigment. Examples of specific coloring agents or toners include aluminum powder, copper powder, brass powder, and dyes.

Examples of color pigments other than white pigment include inorganic pigments such as Titanium Yellow, iron oxide pigments, Ultramarine Blue, Cobalt Blue, Chromium Oxide Green, Spinel Green, Chrome Yellow, Chrome Vermilion, Cadmium Yellow, Cadmium Red, and organic pigments such as azo lake pigments, Hanza pigments, benzimidazolone pigments, monoazo pigments, diarylide pigments, pyrazolone pigments, condensed azo pigments, phthalocyanine pigments, quinacridone pigments, perylene pigments, perinone pigments, dioxazine pigments, antrhaquinone pigments, and isoindolinone pigments.

Binding polymers include any polymer capable of holding the opacifying pigment within the polymer matrix of the correction medium layer. Preferred binding polymers include Rovene^{RTM} 4170, Rovene^{RTM} 4176, Rovene^{RTM} 4041, manufactured by Mallard Creek, UCAR LATEX^{RTM} 480, UCAR LATEX^{RTM} 651, UCAR LATEX^{RTM} 169, UCAR LATEX^{RTM} 379, UCAR^{RTM} 149, UCAR^{RTM} 441 manufactured by Union Carbide, AIR FLEX^{RTM} 465, AIR FLEX^{RTM} 401, AIR FLEX^{RTM} 124, AIR FLEX^{RTM} 114 manufactured by Air Products, GCRYL^{RTM} 1256, GCRYL^{RTM} 1238, GCRYL^{RTM} 1224, ACX^{RTM} 12-924 manufactured by Henkel, NEOCRYL^{RTM} A-5044, NEOCRYL^{RTM} BT62, NEOCRYL^{RTM} XA 2022, NEOCRYL^{RTM} A-5047 manufactured by Zeneca. More preferred binding polymers include acrylic and methacrylic multipolymers having a Tg range of between about - 60°C to about 20°C, preferably between about -50°C to about 5°C. Polymers may be blended as is well known in the art.

The amount of binding polymer present in the correction medium layer is between about 1% to about 35% by weight. Preferably, the amount is between about 5% to about 25% by weight.

The term "bleed inhibitor" means a chemical additive which, when present, prevents ink from migrating into a correction medium layer after the correction medium is applied to erroneous markings. Suitable bleed inhibitors include polyvinyl amine or salts thereof, phosphatidyl choline (mixtures of diglycerides of fatty acids linked to the choline ester of phosphoric acid), tallow amines, and mixtures thereof. A preferred polyvinyl amine is a homopolymer of vinyl amine having a weight average molecular weight of between about 1000 to about 100,000.

Preferably, two or more bleed inhibitors can be used together in the correction medium layer. A preferred combination of two bleed inhibitors includes the polyvinyl amine in an amount of 20% to 80% by weight of the total amount of bleed inhibitor and phospholipid in an amount of 80% to 20% by weight. In this combination, it is often desirable to include a greater amount (i.e., more than 50% by weight) of the polyvinyl amine. More preferably, all three bleed inhibitors can be used in the correction medium layer. In this combination, the polyvinyl amine may be present in an amount of between about 30% to about 80% by weight, the phospholipid in an amount of between about 10% to about 35% by weight, and the tallow amine in an amount of between about 10% to about 35% by weight, wherein all three components total 100% of the bleed inhibitor.

Whether composed of one, two or more components, the bleed inhibitor is present in the correction medium in an amount between about 0.1% to about 10% by weight, preferably between about 0.5% to about 5% by weight and more preferably between about 1% to about 4% by weight.

A typical process for the preparation of a correction tape comprises applying a uniform coating of a correction medium layer onto a support member in conventional manner. The correction medium layer may be applied using a standard coating machine which applies a uniform amount of liquid and dries the wet film. The dry film thickness is between about 5 microns to about 45 microns. Preferably, the dry film thickness is between about 15 microns to about 28 microns.

The pressure sensitive adhesive of the transfer layer may also be applied to on top of the correction medium layer in the same manner as the coating was applied. Suitable pressure sensitive adhesives include Nacor^{RTM} 4554, Nacor^{RTM} 8685, Nacor^{RTM} 9926 manufactured by National Starch and Chemical Company, Fulatex^{RTM} PN-3181-K, Fulatex^{RTM} PN-3819-G manufactured by H.B. Fuller, Acronal^{RTM} v 275, Acronal^{RTM} A 220, Acronal^{RTM} 3432 manufactured by BASF, Covinax^{RTM} 210-00, Covinax^{RTM} 225-00, Covinax^{RTM} 222-00 manufactured by Franklin International, and mixtures thereof. The minimum amount of adhesive applied is that which enables the correction medium layer to adhere to the substrate. One of ordinary skill in the art can easily determine the amounts to use by routine testing.

### EXAMPLES

Certain embodiments and features of the invention are now illustrated, but not limited, by the following working examples.

### Example 1

This example illustrates a general method for formulating the correction medium of the invention. Water, an alkanol amine (for pH adjustment), and a defoamer are added in a vessel and mixed under low shear via a high speed disperser or rotor stator disperser. After mixing for approximately five minutes, lecithin is added and mixed for 45 minutes under high shear. The resin and wax emulsion are added and mixed under low shear, subsequently, pigments and fillers are mixed in under high shear. Other additives included in the correction medium layer or transfer layer are biocide, toners, and surfactants. Upon completion of mixing, the correction medium should be held for 24 hours. The composition is then coated onto a support member via a coating machine which applies a uniform amount of liquid and dries the wet film to a thickness of 14-28 microns. A pressure sensitive adhesive layer is then applied by the same method on top of the correction medium layer to form the correction tape of the invention.

### Example 2

Water 28-32% by weight, AMP-95 (2-amino-2-methyl-1-propanol) by ANGUS CHEMICAL Co. 0.1 to 2% by weight, and a foam suppressing dispersion defoamer, Dee Fo^{RTM} 97-3 by Ultra Additives 0.1 to 2% by weight are added in a vessel and mixed under low shear via a high speed disperser or rotor stator disperser. After mixing for approximately five minutes, polyvinyl amine PVA made by Polysciences 0.5 to 1.5% by weight, is added as a bleed inhibitor and mixed for 45 minutes under high shear. A resin emulsion ACRONOL^{RTM} V-210 by BASF at 5-8%, and a wax emulsion, SLYP-AYD^{RTM} SL 340 E made by ELEMENTIS at 6-8% by weight, are added and mixed under low shear. Subsequently, pigments, rutile TiO₂ 30-50% by weight, and fillers, totaling 13-20% by weight, are mixed in under high shear. Other additives included in the correction medium are biocide, KATHON^{RTM} PFM by ROHM & HAAS 0.1 to 5% by weight, toners, TINTAYD^{RTM} WD 2115 Violet and TINTAYD WD 2228 0.015% total of 2% by weight, and surface tension modifiers, surfactant FC-120 by 3M at 0.5 to 1.5% by weight. Upon completion of mixing, the correction medium should is held for 24 hours. The composition then is coated onto a support member via coating machine which applies a uniform amount of liquid and dries the wet film to a thickness of about 14-28 microns. Subsequently, a layer of pressure sensitive adhesive is applied on the correction medium layer to form the correction tape of the invention.

### Example 3

Water 28-32% by weight, AMP-95 (2-amino-2-methyl-1-propanol) by ANGUS CHEMICAL Co. 0.1 to 2% by weight, and a foam suppressing dispersion defoamer, Dee Fo^{RTM} 97 by ULTRA ADDITIVES 0.1 to 2% by weight are added in a vessel and mixed under low shear via a high speed disperser or rotor stator disperser. After mixing for approximately five minutes, 0.5% to 1.5% by weight of a bleed inhibitor mixture of about 2 parts polyvinyl amine, about 1 part lecithin and about 1 part tallow amine, is added and mixed for 45 minutes under high shear. The resin emulsion ACRONOL^{RTM} V-210 by BASF at 5-8% and the wax emulsion, SLIP-AYD^{RTM} SL 340-E by ELEMENTIS at 6-8% by weight, are added and mixed under low shear. Subsequently, pigments, rutile TiO₂ 30-50% by weight, and fillers, totaling 13-20% by weight, are mixed in under high shear. Other additives included in the correction medium are biocide, KATHON^{RTM} PFM by ROHM & HAAS 0.1 to 0.5% by weight, toners, TINTAYD^{RTM} WD 2115 Violet and TINTAYD^{RTM} WD 2228 by ELEMENTIS 0.015% by weight, and surface tension modifiers, surfactant FC-120 by 3M at 0.5 to 1.5% by weight. Upon completion of mixing, the correction medium should is held for 24 hours. The composition is coated onto a support member via coating machine which applies a uniform amount of liquid and dries the wet film to a thickness of 14-28 microns. Subsequently, a layer of pressure sensitive adhesive is applied on the correction medium layer to form the correction tape of the invention.

### Example 4

The correction tape of Examples 1- 3 were applied onto various erroneous markings on white bond paper, as compared to commercially available tape corrections without bleed inhibitor. Results are as follows:

| Sample | Erroneous marking made by: | | |
|---|---|---|---|
| | BIC Round Stick Red Medium Ball Pen | Rose Art Red Medium Ball Point Stick Pen | Cross Red 8515 Medium Ball Point Pen |
| Tape of Example 3 | None | Slight | Slight |
| Tape of Example 3 without Bleed Inhibitor | Slight | Moderate | Moderate |

### Test Procedure:

The three test inks listed above were applied in a straight line onto Hammermill Tidal^{RTM} DP Long Grain 75g/m² white paper. The inks were allowed to dry for 30 minutes, after which the correction tape was applied over the ink marking. After this initial application, the underlying ink marking was completely hidden by the correction tape. Subsequently, the correction tapes applied over the ink markings were kept in a 24°C, 48% relative humidity environment for 48 hours. The display containing the correction tapes placed over the ink markings was then visually observed for any signs of ink bleeding. Ink bleed is graded by the level of ink color visually detected on the white correction tape. The degree of ink bleed were judged on a scale from None to Slight to Moderate to Severe.

The results of Example 4 clearly demonstrate the reduced bleed through obtained with tapes embodying the present invention. As shown in Example 4, the amount of bleed through in the tape embodying the present invention, i.e., the tape of Example 3, is substantially less than bleed through in a conventional correction tape which does not contain bleed inhibitors.

The invention described and claimed herein is not to be limited in scope by the specific embodiments herein disclosed, since these embodiments are intended as illustrations of several aspects of the invention. Any equivalent embodiments are intended to be within the scope of this invention. Indeed, various modifications of the invention in addition to those shown and described herein will become apparent to those skilled in the art from the foregoing description. Such modifications are also intended to fall within the scope of the appended claims.

## Claims

1. A correction tape comprising:
a support member;
a correction medium layer which includes:
an opacifying pigment in an amount sufficient to mask printed or ink matter on a substrate;
a bleed inhibitor in an amount sufficient to prevent or reduce ink transmission through the correction medium layer; and
a polymeric binder for retaining the opacifying pigment and bleed inhibitor in the correction medium layer to facilitate deposition of the layer onto the support member and to retain integrity when the layer is transferred to the substrate to mask the printed or ink matter thereon; and
a transfer layer which includes a pressure sensitive adhesive for adhering the correction medium layer to the printed or ink matter and substrate.

2. The correction tape of claim 1 wherein the support member is paper, thermoplastic film, or metallic foil.

3. The correction tape of claim 1 wherein the support member is a coated glassine paper to facilitate removal of the correction medium layer.

4. The correction tape of claim 1 wherein the bleed inhibitor comprises at least one polyvinyl amine, phospholipid, tallow amine, or a mixture thereof.

5. The correction tape of claim 4 wherein the bleed inhibitor includes both the polyvinyl amine and the phospholipid.

6. The correction tape of claim 5 wherein the polyvinyl amine is present between about 20% to about 80%, and the phospholipid between about 80% to 20%.

7. The correction tape of claim 5 wherein the polyvinyl amine is present in an amount which is greater than that of the phospholipid.

8. The correction tape of claim 4 wherein the bleed inhibitor includes the polyvinyl amine, the phospholipid, and the tallow amine.

9. The correction tape of claim 8 wherein the polyvinyl amine is present in an amount between about 30% to about 80%, the phospholipid is present in an amount between about 10% to about 35%, and the tallow amine is present in amounts between 10% and about 35%.

10. The correction tape of claim 8 wherein the phospholipid is a complex combination of a diglyceride of a fatty acid linked to the choline ester of phosphoric acid.

11. The correction tape of claim 10 wherein the phospholipid is lecithin, the tallow amine is N-tallow amine, and the polyvinyl amine is a homopolymer of vinyl amine having a weight average molecular weight of between about 1000 to about 100,000.

12. The correction tape of claim 1 wherein the bleed inhibitor is present in the correction medium layer in an amount between about 0.01% to about 10% by weight.

13. The correction tape of claim 1 wherein the bleed inhibitor is present in the correction medium layer in amounts between about 0.5% to about 5% by weight.

14. The correction tape of claim 8 wherein the total amount of the three bleed inhibitor components is between about 0.01% to about 10% by weight.

15. The correction tape of claim 8 wherein the total amount of the three components of the bleed inhibitor is between about 0.5% to about 5% by weight.

16. The correction tape of claim 1 wherein the opacifying pigment comprises TiO₂.

17. The correction tape of claim 1 wherein the correction medium layer further comprises at least one of a filler, biocide, defoamer, wax emulsion, or surfactant.

18. The correction tape of claim 1 further comprising at least one toner in an amount sufficient to impart a color to the correction medium layer.

## Revendications

1. Ruban de correction comprenant :
un élément de support ;
une couche de milieu de correction qui comprend :
un pigment opacifiant dans une quantité suffisante pour masquer une impression ou une encre sur un substrat ;
un inhibiteur de débordement dans une quantité suffisante pour empêcher ou réduire la transmission d'encre à la couche de moyen de correction ; et
un liant polymérique pour retenir le pigment opacifiant et l'inhibiteur de débordement dans la couche de milieu de correction afin de faciliter le dépôt de la couche sur l'élément de support et de maintenir l'intégrité lorsque la couche est transférée au substrat afin de masquer l'impression ou l'encre située dessus ; et
une couche de transfert qui comprend une colle sensible à la pression pour faire adhérer la couche de milieu de correction à l'impression ou à l'encre et au substrat.

2. Ruban de correction selon la revendication 1, dans lequel l'élément de support est du papier, un film thermoplastique ou une feuille métallique.

3. Ruban de correction selon la revendication 1, dans lequel l'élément de support est un papier cristal enrobé afin de faciliter le retrait de la couche de milieu de correction.

4. Ruban de correction selon la revendication 1, dans lequel l'inhibiteur de débordement comprend au moins une amine polyvinyle, un phospholipide, une amine de suif, ou un mélange de ceux-ci.

5. Ruban de correction selon la revendication 4, dans lequel l'inhibiteur de débordement comprend l'amine polyvinyle et le phospholipide.

6. Ruban de correction selon la revendication 5, dans lequel l'amine polyvinyle est présente d'environ 20% à environ 80%, et dans lequel le phospholipide est présent d'environ 80% à 20%.

7. Ruban de correction selon la revendication 5, dans lequel l'amine polyvinyle est présente dans une quantité qui est supérieure à celle du phospholipide.

8. Ruban de correction selon la revendication 4, dans lequel l'inhibiteur de débordement comprend l'amine de polyvinyle, le phospholipide et l'amine de suif.

9. Ruban de correction selon la revendication 8, dans lequel l'amine polyvinyle est présente dans une quantité située entre environ 30% et environ 80%, le phospholipide est présent dans une quantité située entre environ 10% et environ 35%, et l'amine de suif est présente dans des quantités situées entre 10% et environ 35%.

10. Ruban de correction selon la revendication 8, dans lequel le phospholipide est une combinaison complexe d'un diglycéride d'un acide gras lié à l'ester choline d'un acide phosphorique.

11. Ruban de correction selon la revendication 10, dans lequel le phospholipide est de la lécithine, l'amine de suif est une amine N-suif, et l'amine de polyvinyle est un homopolymère d'amine vinyle possédant un poids moléculaire moyen situé entre environ 1000 et environ 100000.

12. Ruban de correction selon la revendication 1, dans lequel l'inhibiteur de débordement est présent dans la couche de moyen de correction dans une quantité située entre environ 0,01% et environ 10% en poids.

13. Ruban de correction selon la revendication 1, dans lequel l'inhibiteur de débordement est présent dans la couche de moyen de correction dans des quantités situées entre environ 0,5% et environ 5% en poids.

14. Ruban de correction selon la revendication 8, dans lequel la quantité totale des trois composants inhibiteurs de débordement est entre environ 0,01% et environ 10% en poids.

15. Ruban de correction selon la revendication 8, dans lequel la quantité totale des trois composants de l'inhibiteur de débordement est entre environ 0,5% et environ 5% en poids.

16. Ruban de correction selon la revendication 1, dans lequel le pigment opacifiant comprend TiO₂.

17. Ruban de correction selon la revendication 1, dans lequel la couche de milieu de correction comprend en outre au moins une charge, un biocide, un anti-mousse, une émulsion de cire, ou un tensioactif.

18. Ruban de correction selon la revendication 1, comprenant en outre au moins un colorant pigmentaire dans une quantité suffisante pour transmettre une couleur à la couche de milieu de correction.

## Patentansprüche

1. Korrekturband mit:
einem Trägerteil;
einer Schicht eines Korrekturmediums, das einschließt:
ein deckendes Pigment in einer Menge, die ausreicht, gedruckte oder Tinten-Materie auf einem Substrat zu maskieren;
einen Ausblutungsinhibitor in einer Menge, die ausreicht, einen Tintendurchtritt durch die Schicht des Korrekturmediums zu verhindern oder zu vermindern; und
ein polymeres Bindemittel zum Festhalten des deckenden Pigments und des Ausblutungsinhibitors in der Schicht des Korrekturmediums, um die Abscheidung der Schicht auf dem Trägerteil zu erleichtern und die Integrität der Schicht aufrechtzuerhalten, wenn die Schicht auf das Substrat übertragen wird, um die darauf befindliche gedruckte oder Tinten-Materie zu maskieren; und
eine Transferschicht, die einen Haftklebstoff beinhaltet, um ein Haften der Schicht des Korrekturmediums auf der gedruckten oder Tinten-Materie und dem Substrat zu gewährleisten.

2. Korrekturband nach Anspruch 1, wobei der Trägerteil Papier, eine thermoplastische Folie oder eine Metallfolie ist.

3. Korrekturband nach Anspruch 1, wobei der Trägerteil ein beschichtetes Pergamin-Papier ist, um die Abgabe der Schicht des Korrekturmediums zu erleichtern.

4. Korrekturband nach Anspruch 1, wobei der Ausblutungsinhibitor wenigstens ein Polyvinylamin, Phospholipid, Talgamin oder eine Mischung daraus umfasst.

5. Korrekturband nach Anspruch 4, wobei der Ausblutungsinhibitor sowohl das Polyvinylamin als auch das Phospholipid umfaßt.

6. Korrekturband nach Anspruch 5, wobei das Polyvinylamin in etwa 20 bis 80% vorhanden ist, und das Phospholipid zwischen etwa 80 bis 20%.

7. Korrekturband nach Anspruch 5, wobei das Polyvinylamin in einer Menge vorhanden ist, die größer ist als die des Phospholipids.

8. Korrekturband nach Anspruch 4, wobei der Ausblutungsinhibitor das Polyvinylamin, das Phospholipid und das Talgamin enthält.

9. Korrekturband nach Anspruch 8, wobei das Polyvinylamin in einer Menge zwischen etwa 30 bis etwa 80% vorhanden ist, das Phospholipid in einer Menge zwischen etwa 10 bis etwa 35% vorhanden ist, und das Talgamin in Mengen zwischen 10 und etwa 35% vorhanden ist.

10. Korrekturband nach Anspruch 8, wobei das Phospholipid eine komplexe Kombination aus einem Diglycerid einer Fettsäure ist, das mit dem Cholinester der Phosphorsäure verknüpft ist.

11. Korrekturband nach Anspruch 10, wobei das Phospholipid Lecithin ist, das Talgamin N-Talgamin ist, und das Polyvinylamin ein Homopolymer von Vinylamin mit einem gewichtsmittleren Molekulargewicht zwischen etwa 1000 und etwa 100.000 ist.

12. Korrekturband nach Anspruch 1, wobei der Ausblutungsinhibitor in der Schicht des Korrekturmediums in einer Menge zwischen 0,01 bis etwa 10 Gew.-% vorhanden ist.

13. Korrekturband nach Anspruch 1, wobei der Ausblutungsinhibitor in der Schicht des Korrekturmediums in Mengen zwischen etwa 0,5 bis etwa 5 Gew.-% vorhanden ist.

14. Korrekturband nach Anspruch 8, wobei die Gesamtmenge der drei Bestandteile des Ausblutungsinhibitors zwischen etwa 0,01 bis etwa 10 Gew.-% liegt.

15. Korrekturband nach Anspruch 8, wobei die Gesamtmenge der drei Bestandteile des Ausblutungsinhibitors zwischen etwa 0,5 bis etwa 5 Gew.-% liegt.

16. Korrekturband nach Anspruch 1, wobei das deckende Pigment TiO₂ umfaßt.

17. Korrekturband nach Anspruch 1, wobei die Schicht des Korrekturmediums außerdem wenigstens eines von einem Füllstoff, einem Biocid, einem Entschäumer, einer Wachsemulsion oder einem Tensid umfaßt.

18. Korrekturband nach Anspruch 1, das außerdem wenigstens einen Toner in einer solchen Menge umfaßt, die ausreicht, der Schicht des Korrekturmediums eine Farbe zu verleihen.
